# DEMANDE DE BREVET EUROPEEN

(11) **EP 4 012 612 A1**
(43) Date de publication de la demande: **15.06.2022**
(21) Numéro de dépôt: 20306542.0
(22) Date de dépôt: 11.12.2020
(51) Int. Cl.: G06K 19/02, G06K 19/077

(54) **PROCÉDÉ DE FABRICATION D'UNE CARTE À PUCE AVEC POSITIONNEMENT D'INSERT MÉTALLIQUE**

(71) Demandeur: Thales DIS France SA, 92190 Meudon (FR)
(72) Inventeur: SUBRA, Sébastien, 13881 Gémenos Cedex (FR); SEBAN, Frédérick, 13881 Gémenos Cedex (FR)
(74) Mandataire: Milharo, Emilien

(57) **Abrégé**

L'invention concerne un procédé de fabrication d'une carte à puce métallique (1A, 1B) comportant un insert métallique (2) ayant un bord périphérique (13) s'étendant jusqu'au bord périphérique (3) de la carte et au moins une feuille de recouvrement (4) imprimée, ledit procédé comprenant les étapes suivantes :
- assemblage d'une feuille support imprimée (14) et d'au moins un insert (2) à l'aide d'un plateau d'assemblage (5) comportant des éléments de positionnement (15, 16) de la feuille support et de chaque insert (2),
- extraction de chaque carte à puce métallique (1A ,1B) hors de la feuille support imprimée (14) par découpe ou usinage de la feuille autour d'une périphérie de l'insert.

## Description

### Domaine de l'invention.

L'invention concerne le domaine des cartes à puce métalliques sans-contact comportant des modules à puce de circuit intégré radiofréquence.

Elle vise en particulier la fabrication de carte à puce comportant une ou plusieurs feuille(s) ou plaque métallique(s).

Les cartes à puce peuvent être du type hybride (contacts et sans-contact) ou purement sans-contact (sans bornier de contacts électriques).

Les cartes à puce peuvent avoir un module de carte à puce comportant sur un substrat isolant, un transpondeur radiofréquence comprenant la puce et l'antenne. Ces modules de carte à puce radiofréquence sont généralement encartés dans une cavité du corps de carte.

L'invention vise plus particulièrement les cartes bancaires comportant un corps majoritairement métallique.

### Art antérieur.

On assiste actuellement à une demande accrue du public pour des cartes à puce lourdes intégrant des matières métalliques dont le métal débouche en bordure ou sur la tranche de la carte. Toutefois, les procédés de fabrication sont rendus plus complexes pour obtenir des cartes conformes aux standards en vigueur de la carte à puce.

Le brevet FR 2743649 décrit un module de carte à puce, à antenne et/ou plages de contact, pouvant être incorporé dans une cavité de corps de carte ou pouvant former une étiquette électronique RFID.

Par ailleurs, on connait également des dispositifs radiofréquences hybrides, tels que des cartes à contacts et sans-contact, comportant un module de carte à puce à contacts incorporé dans un corps de carte et connecté à une antenne logée dans le corps de carte.

Par ailleurs, il existe des cartes bancaires comportant des éléments métalliques en insert à l'intérieur du corps de carte en matière plastique ou en surface externe du corps de carte tel que l'aluminium, le titane, de l'or. Le métal procure une sensation de lourdeur de la carte qui est très appréciée par les utilisateurs. Il donne aussi un aspect esthétique visible qui en fait un produit haut de gamme pour privilégiés.

### Problème technique.

L'invention vise à résoudre les inconvénients ou objectifs précités.

Aujourd'hui, dans les procédés de fabrication actuels, la position d'une pluralité d'inserts métalliques pris en sandwich entre deux feuilles polymères, peut bouger au cours de l'assemblage. Cela engendre des pertes de rendement pendant l'opération d'extraction de chaque carte avec un insert par découpe de la structure sandwich.

Ces cartes obtenues par ces procédés présentent un poids de 12,5g qui est insuffisant par rapport à la demande du marché.

Les cartes à bords métalliques visées par l'invention sont supposées être d'au moins 16g. La seule possibilité, imaginée par les inventeurs, d'atteindre cet objectif est d'augmenter l'épaisseur de la plaque de métal qui requiert nécessairement d'imprimer directement sur le métal (plutôt que sur une feuille de couverture (overlay en anglais).

La demande de brevet WO2019/032578 A1 décrit un procédé de repérage des inserts métalliques par rayon X pour les extraire facilement et avec précision. Il est également connu d'interconnecter des inserts métalliques entre eux pour maintenir leur position.

L'invention propose également une structure de carte métallique avec des bords métalliques visibles procurant un maximum de poids, présentant de bonnes performances radiofréquences et facile à fabriquer.

En particulier, l'invention vise une structure de carte avec module à puce électronique radiofréquence RF.

La carte peut également avoir une structure satisfaisant les contraintes de tenue mécanique en terme d'ISO et de durabilité dans le temps. De telles cartes peuvent être conformes notamment au standard ISO 7810, ISO 7816 et/ ou ISO / IEC 14443 ou équivalents pour effectuer des échanges de communication à contacts et/ou de proximité avec un lecteur à contacts ou de type NFC.

### Résumé de l'invention.

L'invention peut consister selon un mode préféré de réalisation, à placer au moins une ou de préférence plusieurs cartes métalliques individuelles au format ISO 7810 sur un plateau d'assemblage ou incrustation transformé à cet effet.

Le plateau peut être réalisé en métal ou un polymère très résistant à la température. Le plateau limite le mouvement de l'insert métallique pendant le processus de laminage. Des aiguilles ou broches positionnées ou indexées sur le plateau d'assemblage permet également à des feuilles imprimées et à la plaque de laminage d'être parfaitement indexés ou positionnées avec les inserts métalliques.

L'antenne peut être de préférence réalisée par incrustation de fil conducteur dans une feuille polymère notamment en PVC.

Le cas échéant, selon un mode de réalisation pratique, une antenne relais peut être formée (ou noyée dans) un substrat ou bloc de matière polymère ou toute matière perméable aux champs électromagnétiques dont les dimensions correspondent à celle d'un évidement (ou cavité) d'une plaque de métal. Le module à puce de transpondeur radiofréquence peut être monté sur un insert lui-même avant ou après assemblage de l'antenne dans la plaque métallique.

A cet effet, l'invention a pour objet un procédé de fabrication d'une carte à puce métallique comportant un insert métallique ayant un bord périphérique s'étendant jusqu'au bord périphérique de la carte et au moins une feuille de recouvrement imprimée, ledit procédé comprenant les étapes suivantes :
- assemblage d'une feuille support imprimée et d'au moins un insert à l'aide d'un plateau d'assemblage comportant des éléments de positionnement de la feuille support et de chaque insert,
- extraction de chaque carte à puce métallique hors de la feuille support imprimée par découpe ou usinage de la feuille autour d'une périphérie de l'insert.

Le procédé peut comprendre d'autres caractéristiques ou étapes suivantes :
- Les éléments de positionnement peuvent comporter des aiguilles de positionnement perpendiculaires au plateau d'assemblage, traversant les feuilles via des perforations d'indexation disposées dans les feuilles à distance de chaque insert ;
- Une étape de recours à une feuille de compensation d'épaisseur de chaque insert, ladite feuille de compensation comportant au moins un logement configuré aux dimensions de l'insert pour recevoir l'insert au cours de l'assemblage, et des perforations configurées pour coopérer avec lesdits éléments de positionnement du plateau d'assemblage afin de se positionner par rapport à l'insert ;
- Une étape d'enlèvement de ladite feuille support assemblée avec au moins ledit insert par rapport au premier plateau, et une étape de retournement de ladite structure pour être placée sur un second plateau ayant des seconds éléments de positionnement de manière à ce que chaque insert ait une face externe libre exposée vers l'extérieur ;
- Une étape d'insertion d'un module radiofréquence dans une cavité ménagée dans l'insert et perméable au champ radiofréquence et une étape de personnalisation graphique de ladite face externe ;
- L'insert peut comporter ou être formé d'une plaque en métal P autour de ladite cavité ;
- Une antenne relais et/ou un module radiofréquence peut être réalisée sur un substrat support au format sensiblement correspondant à ladite cavité ;
- L'antenne relais avec son substrat support est assemblé à l'insert de manière à positionner l'antenne relais en regard dudit espace perméable ;
- Le module radiofréquence peut être de préférence recouvert par une matière de masquage ;
- La matière de masquage peut être déposée par impression graphique, sérigraphie, jet de matière, jet d'encre, pelliculage ou fixation d'une pellicule;
- Le procédé peut comprendre une étape d'impression graphique (personnalisée ou non) directement sur l'insert métallique.

### Descriptif des figures :

- La figure 1 illustre une structure de carte conforme à un mode de mise en œuvre du procédé de l'invention montrant un assemblage d'une plaque métallique 2 à une feuille de couverture imprimée et un film transparent de protection éventuel;
- La figure 2 est illustre une carte sans contact en vue de dessus, pouvant comprendre les éléments de la figure 1, montrant une antenne radiofréquence logée dans une cavité d'un insert métallique et destinée à se coupler avec une puce radiofréquence ;
- Les figures 3 et 4 illustrent des étapes d'assemblage de l'insert métallique avec au moins une feuille support imprimée ;
- La figure 5 illustre une étape subséquente à l'étape 4, montrant le résultat de l'assemblage enlevé d'un plateau d'assemblage ;
- La figure 6 illustre une structure de carte hybride (contacts et sans-contact) obtenue après recouvrement d'une couche de remplissage dans la cavité 21 sur le support d'antenne, avec un emplacement M pour l'insertion d'un module et son couplage à l'antenne de la figure 2;
- La figure 7 illustre les étapes du procédé de l'invention selon un mode préféré.

### Description.

D'une manière générale, des références identiques ou similaires d'une figure à l'autre représentent un élément identique ou similaire.

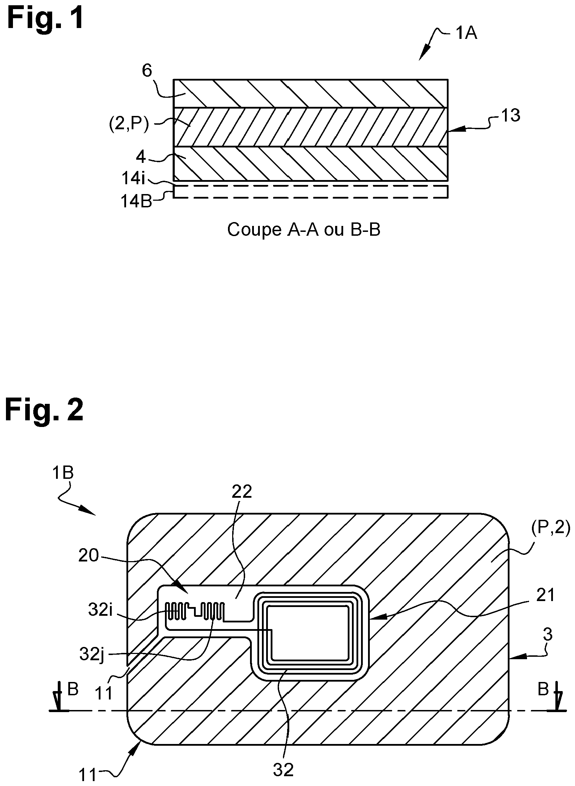

A la figure 1 est illustrée une structure de carte obtenue selon un mode de mise en œuvre du procédé de fabrication d'une carte à puce métallique 1A comportant un insert métallique 2.

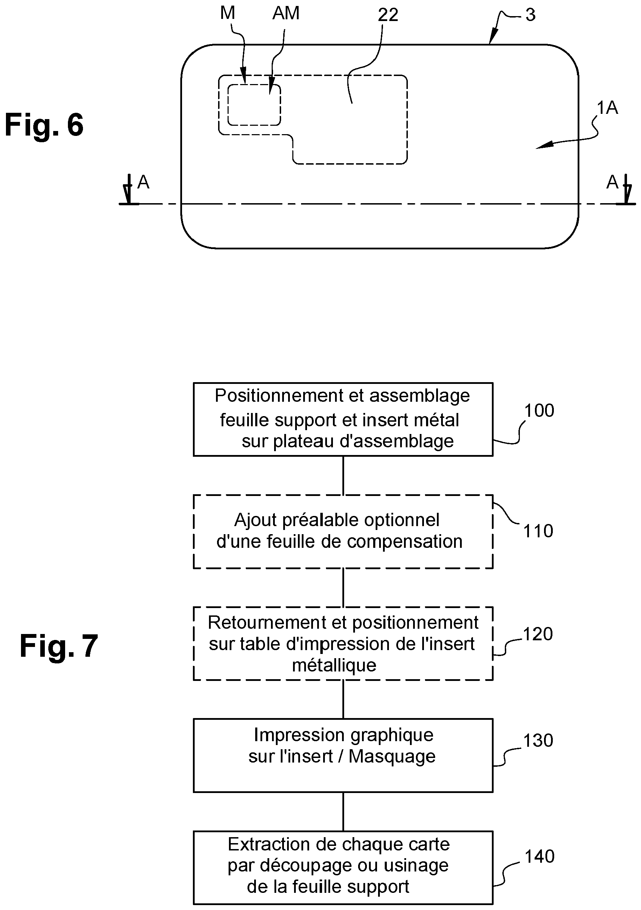

L'insert 2 est ici en forme de plaque métallique P et présente un bord ou contour périphérique 13 qui s'étend jusqu'au bord périphérique 3 de la carte finie 10 (Fig. 6). La carte comprend également au moins une feuille de recouvrement 4 imprimée (avec une première impression graphique 14i, 14j, 14k, 14n) sur une de ses faces principales 1A. Elle peut comprendre aussi de préférence un film de protection (overlay) 14B au-dessus de la feuille imprimée.

La carte comprend aussi de préférence une seconde impression graphique de personnalisation 6 réalisée directement sur l'insert métallique 2 sur sa face opposée à celle portant la feuille plastique 4.

La carte comprend ici une plaque métallique P par exemple en acier, de 16 gramme ou plus; La plaque P s'étend jusqu'au bord périphérique 3 de la carte.

Le procédé comprend les étapes suivantes selon un mode préféré que l'on illustre en relation avec la figure 7 et les différentes figures de structure 1-4.

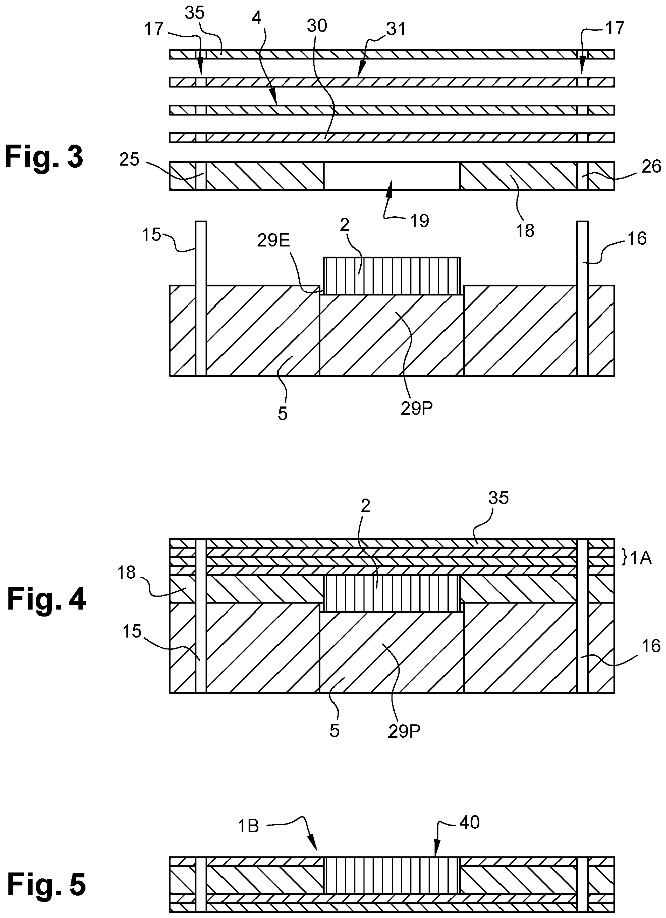

A l'étape 100, (visible aussi sur la figure 3), le procédé effectue le positionnement et l'assemblage d'une feuille support 4 imprimée 14i et d'au moins un insert métallique 2 à l'aide d'un plateau d'assemblage 5.

Le plateau d'assemblage 5 comporte à cet effet des éléments de positionnement 15, 16 de la feuille support 4 imprimée 14i et de chaque insert 2. Dans l'exemple, il s'agit d'au moins deux aiguilles ou broches 15, 16.

De son côté, la feuille support imprimée 4 comporte de préférence une pluralité d'emplacements 19 d'insert, une pluralité de premières impressions 14i - 14n correspondant chacune à une impression graphique d'une carte à puce, et des repères de positionnement 25, 26 (par exemple des perforations) configurés pour coopérer avec les éléments de positionnement du plateau d'assemblage.

Chaque première personnalisation graphique 14i-14n peut être différente d'une autre personnalisation (photographique d'un utilisateur, nom d'utilisateur, numéro de carte bancaire, logo d'entreprise, etc.).

Chaque première impression graphique 14i, 14j, 14k... 14n a été réalisée de préférence en étant indexée précisément par rapport à des repères ou perforations 25, 26 situées par exemple en marge de la feuille support ou à distance des emplacements 29E d'insert.

Chaque première impression graphique 14i peut être réalisée notamment par jet d'encre, sérigraphie, toute autre méthode connue de l'homme de l'art.

Dans l'exemple, figure 3, l'insert métallique est placé dans son emplacement 29 provisoire en reposant sur le plateau 5.

Selon une caractéristique, les éléments de positionnement 15, 16 du plateau peuvent comprendre des aiguilles de positionnement perpendiculaires au plateau d'assemblage ; Ces aiguilles 15, 16 traversent les différentes feuilles de l'assemblage (support 4, compensation 18, protection 31) via des perforations d'indexation 17, 25, 26 disposées dans chaque feuille de l'assemblage à distance de chaque insert 2.

Alternativement, les éléments de positionnement de chaque feuille-support 4 et de l'insert 2 peuvent être formés par un cadre centrant l'ensemble des feuilles.

Alternativement, des éléments de positionnement tels que des aiguilles peuvent être disposées dans une zone de la carte destinée à être ultérieurement usinée, telle qu'une cavité d'encartage d'un module à circuit intégré de carte à puce ou un module capteur d'empreinte ou autre éléments affleurant la surface de la carte. Ainsi, l'avantage est de pouvoir supprimer les éléments de positionnement (perforation) de la feuille support (situés à distance des inserts et qui coopèrent avec ceux de l'insert et/ou du plateau d'assemblage). Le procédé permet ainsi plus d'emplacements d'insert sur une même feuille support ou permet d'opérer sur des feuilles supports au même format que les inserts. La suppression de la perforation peut s'effectuer au cours de l'usinage de la cavité AM de module.

Par exemple, une ou des aiguilles peuvent traverser les feuilles au niveau de la cavité ou emplacement de module AM (fig. 6).

Alternativement, l'insert pourrait comporter des éléments détrompeurs, encoches, nervures ou bossages pouvant coopérer avec détrompeurs, encoches, nervures ou bossages disposées dans au moins la feuille support imprimée 14i.

Au moins deux aiguilles du plateau pourraient traverser les inserts à l'endroit de chaque cavité de module AM pour positionner précisément la feuille support imprimée 14i par rapport à chaque insert.

Ainsi, l'invention permet de positionner les inserts précisément par rapport à cette plaque à protubérances ou aiguilles.

L'invention peut prévoir au moins une protubérance telle qu'une aiguille, traversant l'insert dans une zone à l'intérieur de la cavité 21 de substrat d'antenne et de la cavité de l'emplacement de module AM tout en s'étendant au-delà de la surface supérieure de l'insert pour enfiler un trou de la feuille support imprimée 14i afin de la positionner précisément par rapport à la table (ou plateau 5) et par voie de conséquence également par rapport à l'insert. La protubérance ou aiguille peut ne pas s'étendre en hauteur jusqu'à un plan P1 de cavité.

L'invention peut prévoir des noyaux centreurs (non représentés) à placer dans les cavités 21 et qui comportent une aiguille (ou broche ou un pion) orientée perpendiculairement au plan de l'insert métallique de préférence dans la zone de la cavité de module AM.

Ces noyaux peuvent comporter de préférence deux aiguilles, première et seconde, espacées le plus possible (ou des premiers et seconds pions de positionnement), configurées pour s'engager dans le plateau d'assemblage et positionner précisément chaque insert puisque le noyau a sensiblement la forme de la cavité 21. Ce noyau peut comporter aussi une troisième aiguille ou (pion) s'étendant à travers une perforation de la feuille-support imprimée dans la zone du module M. Ces trois aiguilles peuvent être réparties dans les angles de la cavité du module radiofréquence

Après pressage, le procédé prévoit de retirer les noyaux centreurs et/ou de centrage ou de les maintenir dans le plateau inférieur 5 tandis que la structure laminée est retirée du plateau et retournée pour être placée sur une table d'impression graphique.

A l'étape 110 (fig. 7 et 3), le cas échéant, optionnellement pour faciliter l'assemblage, une feuille de compensation 18 de l'épaisseur de l'insert et de centrage de l'insert, peut être utilisée en étant enfilée (ou positionnée) via ses perforations 25, 26 dans les aiguilles 15, 16 du plateau d'assemblage 5 au préalable. A cet effet, la feuille de compensation 18 peut comprendre des perforations correspondantes 25, 26 similaires aux perforations 17 de la feuille support 4.

Dans l'exemple préféré et illustré, le procédé comprend le recours à cette feuille de compensation d'épaisseur 18 de chaque insert. La feuille de compensation comporte au moins un logement 19 configuré aux dimensions de l'insert pour recevoir l'insert au cours de l'assemblage et les perforations 25, 26.

Un autre avantage de la feuille de compensation est de recouvrir le bord ou la tranche périphérique de l'insert 2 pendant une impression graphique de la face libre de l'insert (opposée à celle adhérant à la feuille-support).

L'insert 2 peut alors être inséré dans le logement 19 de la feuille de compensation et se retrouve ainsi positionné par rapport aux aiguilles de positionnement 15, 16 via la feuille de compensation. La feuille de compensation peut être configurée avec un rebord d'insertion de l'insert évasé ou chanfreiné à l'embouchure (périphérie du logement 19) pour faciliter l'insertion de l'insert.

Alternativement, sans la feuille de compensation 18, le plateau 5 peut comporter un emplacement ou logement 29E ménagé dans le plateau et indexé ou repéré précisément par rapport aux aiguilles 15, 16. Ici, l'emplacement 29E peut correspondre à la surface d'un poinçon 29P coulissant dans le plateau d'assemblage inférieur 5. Le poinçon 29P peut être en retrait comme sur la figure 3 (ou pas) par rapport au niveau supérieur du plateau et il définit ainsi un logement ou emplacement 29E correspondant aux dimensions de la face principale de l'insert métallique 2. Le bord du logement de plateau 29E peut comporter également un chanfrein ou être évasé pour faciliter l'insertion de l'insert 2 sur le poinçon 29P à l'intérieur du logement 29E de poinçon. Le second plateau supérieur 35 peut avoir une épaisseur similaire à celle du premier plateau inférieur 5.

Les feuilles ou films de l'assemblage comprennent ici dans l'exemple, un film adhésif 30 pour adhérer à la fois au métal de l'insert 2 et au plastique de la feuille support 4, notamment ici en PVC. D'autres feuilles plastiques en matières connues de l'homme de l'art de l'industrie de la carte à puce, peuvent être utilisées, tel que ABS, en fibres cellulose naturelles ou synthétiques, en PET, polycarbonate, etc.

Elles comprennent également au contact de l'adhésif, la feuille support 4 qui comporte une couche d'impression graphique 14i et une couche de protection transparente (overlay en anglais) 14B de l'impression graphique.

Pour l'assemblage, le procédé peut prévoir de manière optionnelle un film de lamination et de protection du plateau et/ou de la carte pendant la lamination, entre un plateau supérieur de lamination 35 et les feuilles ou films à assembler.

Au cours du pressage de laminage (figure 4) de l'insert et des feuilles énumérées ci-dessus, le procédé peut prévoir d'actionner le poinçon 29P vers le plateau supérieur 35 pour augmenter la pression d'assemblage au niveau de l'insert.

Selon une autre caractéristique du mode préféré, le procédé peut comprendre une étape d'enlèvement de ladite feuille support 4 assemblée avec au moins l'insert 2 par rapport au premier plateau d'assemblage 5, ainsi qu'une étape de retournement de ladite structure pour la placer sur un second plateau 55 (non représenté) ayant des seconds éléments de positionnement 36, 37 (non représenté), de manière à ce que chaque insert 2 ait une face externe 40 libre exposée vers l'extérieur. Le cas échéant, on peut utiliser le même plateau 55 et les éléments 36, 37 seraient alors identiques aux éléments de positionnement 15, 16.

Dans l'exemple, à la figure 5, le produit de l'assemblage 40 (2, 18, 30, 4 et optionnellement 31) est retiré des plateaux inférieur 5 et supérieur 35 ainsi que des aiguilles 15, 16.

A l'étape 120, (figures 7 et 5), le produit intermédiaire 1B résultant peut être ensuite retourné et transféré à un poste d'impression graphique pour impression graphique (étape 130) de l'insert 2 sur sa face libre 40.

Selon une caractéristique, le procédé comprend une étape d'insertion d'un module radiofréquence 20 dans une cavité 21 ménagée dans l'insert et perméable au champ radiofréquence et une étape de personnalisation graphique de ladite face externe de l'insert. Le module radiofréquence 20 peut comporter typiquement une antenne 32 sur un substrat 22.

Dans l'exemple, le module radiofréquence 20 est inséré dans l'insert métallique 2 après retournement du produit intermédiaire obtenu à la figure 4.

Alternativement, le module 20 peut être inséré dans l'insert 2 avant l'assemblage aux feuilles.

A cet effet, l'insert 2 comporte ou est formé d'une plaque en métal P autour de ladite cavité 21. La cavité 21 peut être réalisée au préalable de l'assemblage.

La figure 2, illustre un exemple de cavité 21 et de module radiofréquence 20 inséré dans la cavité. Une antenne relais et/ou un module radiofréquence 20 est réalisée sur un substrat support isolant 22 au format sensiblement correspondant à la cavité 21.

En cas d'antenne relais 21R (non représentée), son substrat support 21 peut être assemblé à l'insert 2 de manière à positionner l'antenne relais 21R en regard de l'espace perméable (cavité) aux ondes radiofréquences de l'insert. L'antenne relais 21R peut remplacer l'antenne à plages d'interconnexion 32i, 32j à un module radiofréquence. Elle est couplée inductive ment à une antenne de module radiofréquence comportant un substrat, une antenne de module relié à un circuit intégré radiofréquence.

L'insert 2 peut comprendre une plaque (4) avec une fente (11) coupant la plaque dans son épaisseur et s'étendant d'une périphérie externe (9) de la plaque jusqu'à une périphérie interne de l'espace ou cavité 21 perméable au champ radiofréquence.

Le module radiofréquence 20 peut être de préférence recouvert par une matière de masquage (non représentée). Cette matière de masquage peut être réalisée au poste d'impression graphique (étape 130) ou sur un autre poste. La matière de masquage peut être déposée par impression graphique, sérigraphie, jet de matière, jet d'encre pelliculage ou fixation d'une pellicule.

Alternativement, la matière de masquage du substrat d'antenne peut être appliquée après découpe ou extraction de la carte.

Ensuite, (toujours étape 130) le procédé comprend une étape de seconde impression graphique 6 (fig. 1) directement sur la surface 40 (fig. 5) de l'insert métallique 2.

Cette impression 6 peut être avantageusement réalisée après extraction de la carte ou avant extraction. De préférence, elle est réalisée alors que l'insert est sur la feuille support 4 avec feuille de compensation d'épaisseur 18 de manière à protéger la tranche ou bord 13 de la carte de l'impression graphique.

A l'étape 140, le procédé réalise une extraction de chaque carte à puce métallique 1A hors de la feuille support imprimée 14 par découpe ou usinage de la feuille autour d'un contour périphérique de l'insert.

L'extraction peut être réalisée en ayant recours à un outil de découpe du type poinçon matrice, à lames ou par cisaillement.

Alternativement, le procédé utilise un outil de découpe tel une fraise, un laser, des couteaux, jet d'eau, etc. qui approche le bord 13 de la carte jusqu'à l'effleurer et qui usine la feuille support à l'aplomb du contour 3 de la carte.

Alternativement, le procédé peut utiliser un système de vision assisté par ordinateur pour localiser le contour de la carte et usiner tout autour. Il peut également utiliser des capteurs optiques de positionnement de la fraise par rapport au bord de la carte ou des capteurs de contact détectant un courant électrique de la fraise dès que celle-ci touche l'insert métallique ou un courant capacitif entre la fraise et l'insert métallique.

## Revendications

1. Procédé de fabrication d'une carte à puce métallique (1A, 1B) comportant un insert métallique (2) ayant un bord périphérique (13) s'étendant jusqu'au bord périphérique (3) de la carte et au moins une feuille de recouvrement (4) imprimée, ledit procédé comprenant les étapes suivantes :
- assemblage d'une feuille support imprimée (14) et d'au moins un insert (2) à l'aide d'un plateau d'assemblage (5) comportant des éléments de positionnement (15, 16) de la feuille support et de chaque insert (2),
- extraction de chaque carte à puce métallique (1A ,1B) hors de la feuille support imprimée (14) par découpe ou usinage de la feuille autour d'une périphérie de l'insert.

2. Procédé selon la revendication précédente, **caractérisé en ce que** les éléments de positionnement (15, 16) comportent des aiguilles de positionnement perpendiculaires au plateau d'assemblage (5), traversant les feuilles via des perforations d'indexation (17) disposées dans les feuilles à distance de chaque insert.

3. Procédé selon l'une des revendications précédentes, **caractérisé en ce qu'**il comprend le recours à une feuille de compensation d'épaisseur (18) de chaque insert, ladite feuille de compensation comportant au moins un logement (19) configuré aux dimensions de l'insert pour recevoir l'insert au cours de l'assemblage, et des perforations (25, 26) configurées pour coopérer avec lesdits éléments de positionnement (15, 16) du plateau d'assemblage afin de se positionner par rapport à l'insert.

4. Procédé selon l'une des revendications précédentes, **caractérisé en ce qu'**il comprend une étape d'enlèvement de ladite feuille support assemblée avec au moins ledit insert par rapport au premier plateau, et une étape de retournement de ladite structure pour être placée sur un second plateau ayant des seconds éléments de positionnement (36, 37), de manière à ce que chaque insert (2) ait une face externe (40) libre exposée vers l'extérieur.

5. Procédé selon la revendication précédente, **caractérisé en ce qu'**il comprend une étape d'insertion d'un module radiofréquence (20) dans une cavité (21) ménagée dans l'insert et perméable au champ radiofréquence et une étape de personnalisation graphique de ladite face externe.

6. Procédé selon la revendication précédente, **caractérisé en ce que** l'insert (2) comporte ou est formé d'une plaque P en métal autour de ladite cavité (21).

7. Procédé selon l'une des revendications précédentes, **caractérisé en ce qu'**une antenne relais (30) et/ou un module radiofréquence (20) est réalisée sur un substrat support (22) au format sensiblement correspondant à ladite cavité.

8. Procédé selon la revendication précédente, **caractérisé en ce que** l'antenne relais (30) avec son substrat support (21) est assemblé à l'insert (2) de manière à positionner l'antenne relais en regard dudit espace perméable.

9. Procédé selon l'une des revendications précédentes, **caractérisé en ce que** ledit insert est une plaque (4) comprenant une fente (11) coupant la plaque dans son épaisseur et s'étendant d'une périphérie externe (9) de la plaque jusqu'à une périphérie interne dudit espace (21) perméable au champ radiofréquence.

10. Procédé selon l'une des revendications précédentes, **caractérisé en ce que** ledit module radiofréquence est recouvert par une matière de masquage.

11. Procédé selon l'une des revendications précédentes, **caractérisé en ce que** ladite matière de masquage est déposée par impression graphique, sérigraphie, jet de matière, jet d'encre, pelliculage ou fixation d'une pellicule.

12. Procédé selon l'une des revendications précédentes, **caractérisé en ce qu'**il comprend une étape d'impression graphique pour réaliser une impression (6) directement sur l'insert métallique.
